# FASCICULE DE BREVET EUROPEEN

(11) **EP 0 949 204 B1**
(45) Date de publication et mention de la délivrance du brevet: **23.06.2004**
(21) Numéro de dépôt: 99430004.4
(22) Date de dépôt: 07.04.1999
(51) Int. Cl.: C02F 1/04, C02F 9/00, B01D 3/14, B01D 1/12, B01D 1/28, B01D 1/26, B01D 3/06, B01D 61/36, B01D 61/58, B01D 3/42

(54) **Procédés et dispositifs de traitement d'eaux résiduaires sucrées ou alcoolisées**
Verfahren und Anlage zur Behandlung von Zucker oder Alkohol enthaltende Abwässer
Process and plant for treatment of waste water containing sugar or alcohol

(30) Priorité: 10.04.1998 FR 9804784
(43) Date de publication de la demande: 13.10.1999
(73) Titulaire: INSTITUT NATIONAL DE LA RECHERCHE AGRONOMIQUE (I.N.R.A.), 75341 Paris Cédéx 01 (FR)
(72) Inventeur: Bories, André, 11110 Armissan (FR); Conesa, Fanny, 30310 Vergeze (FR); Boutolleau, Alain, 34230 Vendemian (FR)
(74) Mandataire: Domange, Maxime

(56) Documents cités:
- EP-A- 0 244 079
- EP-A- 0 356 537
- EP-A- 0 657 205
- FR-A- 2 125 383
- FR-A- 2 222 321
- NL-A- 6 809 729
- US-A- 4 944 882

## Description

La présente invention est relative à un procédé et un dispositif de traitement d'eaux résiduaires sucrées ou alcoolisées.

Le secteur technique de l'invention est celui du traitement des eaux résiduaires.

Les méthodes de traitement des effluents se heurtent à des contraintes techniques et économiques de plus en plus fortes, avec des performances d'épuration qui ne satisfont pas toujours aux normes de rejets, et qui entraînent des coûts d'investissements et des frais d'exploitation de plus en plus lourds.

On utilise à ce jour divers procédés pour traiter les eaux résiduaires, en particulier les effluents sucrés et/ou alcoolisés, qui sont rejetées par différentes industries viticoles, vinicoles ou agro-alimentaires :
- l'épandage des effluents est utilisé dans le cas de petites unités mais il est soumis à diverses limitations pour des unités produisant des rejets en quantités plus importantes : nature et compatibilité des sols, compétition avec l'aménagement foncier et l'urbanisation, inadéquation entre l'activité saisonnière et la disponibilité des sols ou des conditions climatiques, éloignement et transport de volumes d'eau importants ;
- les bassins de stockage avec évaporation naturelle ou forcée nécessitent des choix judicieux d'emplacement, pour des raisons de nuisances éventuelles (olfactives, insectes, aérosols) et pour répondre à des contraintes de réalisation (pérennité de l'imperméabilité des bassins) ; ces contraintes provoquent des surcoûts liés à l'éloignement des installations (canalisations, électrification), aux réactifs chimiques de lutte contre les odeurs, à l'enlèvement et au traitement des produits résiduels ;
- les traitements biologiques aérobies extensifs (comme le lagunage aéré ou les boues activées à faible charge) requièrent des temps de séjour longs, donc des dimensionnements d'ouvrages importants et boues, de la production massive de boues biologiques, de leur séparation et conditionnement qui imposent des systèmes sophistiqués : biétagés, floculation - flottation, déshydratation, élimination des boues ;
- les traitements biologiques par digestion anaérobie, bien adaptés aux effluents chargés et aux grandes unités, sont difficilement applicables aux industries agro-alimentaires d'activité saisonnière et aux effluents de composition variable qui représentent la majorité des cas : les fluctuations importantes de la composition et des flux ne sont pas compatibles avec la réponse lente de l'activité des micro-organismes anaérobies, d'où l'obligation de stockages tampons très grands ou de procédés intensifs de haute technicité (digesteurs à biomasse fixée) difficiles à exploiter ;
- les procédés physiques comme l'évaporation thermique (concentration) s'appliquent depuis longtemps dans l'industrie agro-alimentaire, mais nécessitent un traitement complémentaire des résidus concentrés et des condensats, dont la charge polluante élevée n'est pas compatible avec un rejet dans le milieu ambiant naturel (cours d'eau par exemple).

Le document FR-A-2 222 321 (SPEICHIM) décrit un procédé selon le préambule de la revendication 1 et un dispositif selon le préambule de la revendication 7.

Un objectif de l'invention est de proposer un dispositif et un procédé de traitement d'eaux résiduaires sucrées et/ou alcoolisées qui soient améliorés.

La solution au problème posé consiste à proposer un procédé de traitement d'eaux résiduaires sucrées ou alcoolisées, qui comporte les opérations suivantes :
i) - le cas échéant, on transforme une partie au moins des glucides présents dans les eaux résiduaires en composés volatils, par action de micro-organismes et le cas échéant d'enzymes,
ii) - on sépare une partie au moins des composés volatils initiaux ou produits, des eaux résiduaires par distillation dans une colonne, que l'on récupère en phase liquide par passage dans un échangeur refroidisseur,
iii) - on extrait une partie au moins des résidus (ou charges peu ou pas volatiles) essentiellement organiques des eaux résiduaires, en vue de maintenir la DCO (demande chimique en oxygène) des eaux obtenues - ou traitées - à une valeur inférieure ou égale à 0,5 gramme par litre, de préférence inférieure à 0,3 gramme par litre, par évaporation des eaux résiduaires dans un évaporateur ,
   - on comprime des vapeurs d'eaux résiduaires résultant de l'évaporation des eaux traitées dans l'évaporateur,
   - on utilise des vapeurs d'eaux résiduaires comprimées pour obtenir l'évaporation des eaux résiduaires.

Plus précisément, la présente invention fournit un procédé tel que décrit dans la revendication 1.

les opérations ii) et iii) (de préférence ainsi que l'opération i)), sont de préférence réalisées sensiblement en continu, afin d'éviter le stockage de produits intermédiaires.

La solution au problème posé consiste également à proposer un dispositif ou installation de traitement d'eaux résiduaires sucrées ou alcoolisées, qui comporte :
- un premier séparateur assurant la séparation par distillation dans une colonne et par condensation dans un échangeur refroidisseur d'une partie des composés volatils des eaux résiduaires, et un- moyen de collecte sous forme liquide des composés volatils,
- un deuxième séparateur connecté au séparateur précédent et disposé de préférence en aval de celui-ci, qui assure l'extraction d'une partie au moins des résidus peu ou pas volatils, essentiellement organiques, présents dans les eaux résiduaires, par évaporation des eaux résiduaires,
- un dispositif de compression d'une partie au moins des vapeurs d'eaux résiduaires résultant de l'évaporation des eaux traitées, et une canalisation de délivrance des vapeurs d'eaux résiduaires comprimées à l'évaporateur.

Plus précisément, la présente invention fournit un dispositif tel que décrit dans la revendication 7.

Ce séparateur peut être aussi positionné en amont du séparateur des composés volatils.

Le dispositif comporte de préférence un organe tel qu'un capteur sensible à la qualité des eaux traitées sortant du deuxième séparateur, et un organe de contrôle tel qu'un automate connecté audit organe sensible et apte à maintenir la DCO des eaux obtenues à une valeur inférieure ou égale à 0,5 gramme par litre, de préférence inférieure à 0,3 gramme par litre.

Le capteur de contrôle de la qualité des eaux est de préférence constitué par une ou plusieurs sonde(s) de conductivité (ou résistivité), de pH ou de température, et/ou une sonde de mesure des débits, de la Densité Optique (par exemple aux longueurs d'onde égales à 420 - 520 nanomètres et 620 nanomètres), de la turbidité, ou bien une sonde de dosage en continu de la DCO (ou COT).

Le dispositif comporte également de préférence un moyen de transfert tel qu'une pompe assurant le transfert sensiblement en continu des eaux résiduaires dudit premier séparateur audit deuxième séparateur; ceci permet de traiter les eaux avec une installation compacte, qui peut ainsi être dans certains cas rendue mobile.
Au sens de la présente demande, les composés considérés comme volatils sont : l'éthanol, les alcools supérieurs, les esters, les aldéhydes, les acides organiques (acide acétique, acide sorbique notamment), les acides minéraux (SO₂ notamment) ; les autres composés: sucres, minéraux, acides organiques « lourds » (tels que acides tartrique, malique, lactique, succinique), le glycérol et les polyphénols sont considérés comme peu ou pas volatils.

En général, la charge polluante organique des eaux résiduaires est déterminée par le biais de critères analytiques qui mesurent de façon globale, directe ou indirecte, une expression de la concentration de cette charge. La demande chimique en oxygène (DCO), la demande biochimique en oxygène (DBO) ou la détermination du carbone organique total (COT) sont les critères de base de cette évaluation.

Le procédé selon l'invention s'applique particulièrement au traitement de solutions aqueuses dont la charge organique dissoute est principalement représentée par des sucres (glucides) et/ou de l'éthanol ; c'est le cas d'eaux résiduaires de caves vinicoles, d'industries paravinicoles, de conserveries de fruits et légumes, des industries produisant des boissons fermentées ou non, alcoolisées ou non, des jus de fruits, des confiseries.

L'invention s'applique aussi à des eaux d'industries agro-alimentaires ou de transformation d'agroressources, contenant des glucides tels que les matières amylacées et polysaccharides. Pour assurer leur fermentation finale en éthanol, on fait appel à une phase préliminaire d'hydrolyse, de préférence biologique, grâce à l'action d'hydrolases, telles que les enzymes impliquées dans l'hydrolyse de l'amidon (α amylase, glucosidases, maltase) et matières amylacées, ou capables d'hydrolyser les polysaccharides solubles. Ces enzymes sont introduites, soit sous forme de préparations enzymatiques commerciales, ou produites par des micro-organismes les possédant.

La phase hydrolytique se déroule dans un bioréacteur en amont de la fermentation, de préférence sous des conditions optimales requises (pH, température, concentrations), ou bien conjointement à la fermentation alcoolique.

Dans le cas de certains effluents issus de caves vinicoles et d'élaboration de boissons à base de vins, la composition de la charge polluante organique dissoute est représentée, pour plus de 80 % (et jusqu'à 98 %) de la DCO, par les sucres (glucose et fructose) et/ou par l'éthanol. La proportion sucres / éthanol est liée à la période (vendange, vinification, soutirages), à l'activité vinicole concernée (lavages de cuves, de filtres, conditionnement et embouteillage...), ainsi qu'à la nature des matières premières mises en oeuvre et des produits élaborés. les eaux résiduaires rejetées par les conserveries de fruits peuvent présenter des charges très élevées (DCO dissoute de l'ordre de 40 à 140 grammes par litre qui est principalement due aux sucres du fruit).

L'invention s'applique en particulier aux eaux résiduaires ayant une ou plusieurs des caractéristiques suivantes :
- teneur en éthanol allant de 0.1 à 100 grammes par litre, de préférence de 0.1 à 50 grammes par litre ;
- teneur en matières sèches allant de 0.1 à 150 grammes par litre, de préférence de 0.1 à 100 grammes par litre ;
- teneur en sucres allant de 0.1 à 200 grammes par litre, de préférence de 0.1 à 100 grammes par litre ;
- pH allant de 2 à 10, en particulier de 3 à 8 ;
- DCO allant de 1 à 200 grammes par litre, en particulier de 1 à 50 grammes par litre.

Une caractéristique de l'invention consiste donc à transformer et séparer, de préférence en continu, les principaux constituants des eaux résiduaires en trois fractions ou phases : une phase condensat purifiée (eau rejetable ou recyclable), une phase alcoolique ou flegme (valorisable), une phase concentrée (valorisable en distillerie ou utilisable en compostage ou épandage).

Selon les caractéristiques préférées du procédé selon l'invention :
- dans l'opération i), on provoque une fermentation alcoolique des sucres par des levures ou bactéries, en maintenant un pH compris entre 3 et 8 et en maintenant une température des eaux résiduaires comprise entre 10 et 55°C, de préférence de l'ordre de 20 à 30°C (pour les levures) ;
- dans l'opération iii), on provoque une concentration des résidus organiques, de sorte qu'ils représentent au plus 10 % en volume, et de préférence de l'ordre de 0,5 % à 5 % en volume, des eaux résiduaires à traiter;
- la séparation des composés volatils est effectuée par distillation et condensation à une température de l'ordre de 30 à 110°C ;
- l'extraction et la séparation des résidus peu ou pas volatils est effectuée par évaporations successives (à une température de l'ordre de 35° à 130°C) permettant la concentration des résidus, et par condensation des vapeurs des eaux traitées ; dans ce cas, on peut alimenter un évaporateur par de la vapeur d'eau (à une température de l'ordre de 100° à 180°C) et par une partie des vapeurs (à une température de l'ordre de 35° à 130°C) résultant de l'évaporation des eaux traitées, qui sont préalablement comprimées, afin d'économiser l'énergie nécessaire à l'évaporation.

Selon des caractéristiques préférées du dispositif selon l'invention :
- le dispositif comporte un fermenteur connecté au premier séparateur et disposé en amont de celui-ci, et le fermenteur est muni d'un organe ou capteur sensible au pH des eaux résiduaires et d'un organe ou capteur sensible à la température des eaux résiduaires présentes dans le fermenteur, lesquels organes sensibles sont connectés audit organe de contrôle ;
- ledit premier séparateur et/ou ledit deuxième séparateur sont des filtres membranaires ; alternativement, ledit premier séparateur comporte une colonne de distillation et un condenseur ; ledit deuxième séparateur peut comporter un évapo-condenseur muni d'un séparateur ;
- un dispositif, de préférence mécanique, est prévu pour assurer la compression d'une partie des vapeurs résultant de l'évaporation des eaux traitées.

Les sucres (glucides) étant difficilement séparables des autres constituants organiques et minéraux des eaux résiduaires, sont transformés par voie microbienne et le cas échéant enzymatique en composé(s) volatil(s) en vue de faciliter leur élimination ultérieure. Pour les sucres fermentescibles rencontrés dans les effluents de l'industrie agro-alimentaire, la fermentation alcoolique est la voie proposée, préférentiellement avec les levures ou éventuellement par des bactéries. Parmi les levures, on utilisera de préférence celles du genre Saccharomyces, pour la fermentation des sucres, ou bien une autre levure capable de produire de l'éthanol telle que Schizosaccharomyces, Kluyveromyces, Hanseniospora, Kloeckera, Candida. La fermentation des sucres est réalisée dès la réception des effluents, soit dans un dispositif de stockage tampon des eaux, soit dans des cuves prévues à cet effet. Les conditions de fermentation pourront être contrôlées afin de permettre la transformation des sucres avec un bon rendement, une vitesse suffisante (en apportant par exemple un levain si nécessaire) et une correction éventuelle des paramètres physico-chimiques du milieu: pH entre 3 et 8, température (entre 10 et 35°C et de préférence entre 20 et 30°C) et une teneur minimale en éléments nutritifs minéraux et cofacteurs au cas où l'effluent présenterait une teneur limitante à ce niveau. Les effets inhibiteurs liés aux divers acides organiques et minéraux présents dans les eaux résiduaires peuvent être neutralisés par le contrôle du pH autour de valeurs proches de la neutralité. La fermentation alcoolique peut être également le fait de la flore microbienne indigène de l'effluent ou acclimatée naturellement. On veillera aussi au maintien de l'activité fermentaire et du profil de fermentation ; toute déviation pourra être prévenue par un apport extérieur de micro-organismes et on maintiendra des conditions physico-chimiques les plus favorables à son développement.

Pour s'assurer des meilleures performances de transformation des sucres en éthanol, on recherchera un rendement massique de la fermentation de l'ordre de 0,20 à 0,45 gramme d'éthanol par gramme de sucres fermentés. Le temps de fermentation pourra varier selon la concentration et la nature des sucres, de quelques heures à quelques dizaines d'heures, ce qui correspond au temps de stockage recommandé pour régulariser l'approvisionnement des effluents provenant des diverses opérations industrielles (6 à 120 heures).

Comme évoqué ci-avant, les constituants obtenus sont:
- d'une part une eau épurée issue de la condensation des eaux d'ébullition, lors de la concentration, ou de l'éventuel fractionnement par distillation finale des condensats primaires, qui représente 70 à 98 % du volume d'effluent traité. Cette eau incolore et sans germes microbiens possède une faible charge exprimée en DCO, et comporte de préférence les caractéristiques suivantes qui facilitent son éventuel recyclage ou son rejet en milieu naturel:
   * Densité Optique à 420 nm : 0 à 0,005,
      Densité Optique à 520 nm : 0à 0,005,
      Densité Optique à 620 nm : 0à 0,005.
   * Turbidité : inférieure ou égale à 1 NTU,
   * Matières en suspension totales : au plus 0,02 gramme par litre,
   * Cendres : au plus 0,01 gramme par litre,
   * DCO : inférieure ou égale à 500 milligrammes par litre, de préférence inférieure ou égale à 300 milligrammes par litre,
   * pH de 3 à 8, de préférence de 4 à 7,
   * Acidité totale : de 0 à 500 milligrammes par litre (exprimé en grammes d'acide acétique par litre), de préférence de 0 à 300 milligrammes par litre,
   * Ethanol résiduel : inférieur ou égal à 0,3 gramme par litre, de préférence inférieur ou égal à 0,15 gramme par litre,
   * Absence de germes microbiens, à la sortie des condensats,
   * DB05 inférieure ou égale à 200 milligrammes par litre, de préférence inférieure ou égale à 100 milligrammes par litre,
   * Phosphates : au plus 5 milligrammes par litre,
   * Nitrates : au plus 5 milligrammes par litre,
   * Azote organique : au plus 5 milligrammes par litre ;
- d'autre part, un flegme composé essentiellement d'éthanol, d'acides organiques volatils, d'esters, d'alcools supérieurs, d'aldéhydes et de composés aromatiques subtils ; le degré alcoolique de ce flegme varie généralement et de préférence de 10 à 95 % (pourcentage en volume / volume), de préférence de 20 à 40 % (pourcentage en volume / volume) selon la qualité des produits traités et le niveau de valorisation recherché ;
- et un concentré issu de la phase évaporatoire ou deuxième séparation, ayant une teneur en matières sèches généralement au moins égale à 20 %, généralement de l'ordre de 30 à 60 %.

Les opérations de séparation peuvent être effectuées par barbotage ou utilisation de garnissage et par ébullitions successives dans des colonnes de distillation et des échangeurs tubulaires.

L'énergie utilisée est de préférence la vapeur d'eau issue de générateurs vapeur ou de bouilleurs dans des plages de température variant de 30°C à 180°C, à la pression atmosphérique, ou bien sous vide ou au contraire sous pression.

L'utilisation combinée de techniques de compression mécanique de vapeur et/ou de thermo-compression et de récupération de chaleur permet d'améliorer le rendement énergétique global, bien qu'un chauffage direct soit également possible.

On peut utiliser une colonne de fractionnement autoporteuse en acier inox calorifugée, à fonctionnement par barbotage (clapet-trou-calotte ou garnissage ou anneaux rachi) ; elle peut être utilisée en concentration seule ou en concentration / rectification, et est susceptible de fonctionner sous vide ou sous pression. Elle peut intégrer un bouilleur dans sa partie basse ; la partie condensation peut être à un ou plusieurs étages selon les niveaux de récupération envisagés.

L'invention propose une installation simple, peu coûteuse à fabriquer et dont la capacité et les paramètres de traitement peuvent être facilement adaptés à des eaux résiduaires de volume et d'origines diverses.

Le procédé et l'installation selon l'invention sont fiables, faciles à piloter et peuvent être mis en marche et stoppés rapidement (en quelques dizaines de minutes) : il suffit pour le démarrage d'obtenir un équilibre thermique des appareils et de régler les organes de contrôle en fonction du débit de traitement et de la nature des eaux à traiter

Les avantages procurés par l'invention seront mieux compris au travers de la description suivante qui se réfère aux dessins annexés, qui illustrent sans aucun caractère limitatif des modes préférentiels de réalisation de l'invention.

Dans les dessins, les éléments identiques ou similaires portent, sauf indication contraire, les mêmes références d'une figure à l'autre.

La figure 1 illustre schématiquement les principaux composants d'une installation conforme à l'invention.

La figure 2 illustre schématiquement un autre dispositif de séparation rentrant dans la constitution d'une installation selon l'invention et équipée d'un premier séparateur, essentiellement constitué par une colonne de distillation, et d'un deuxième séparateur essentiellement constitué par un évaporateur concentrateur.

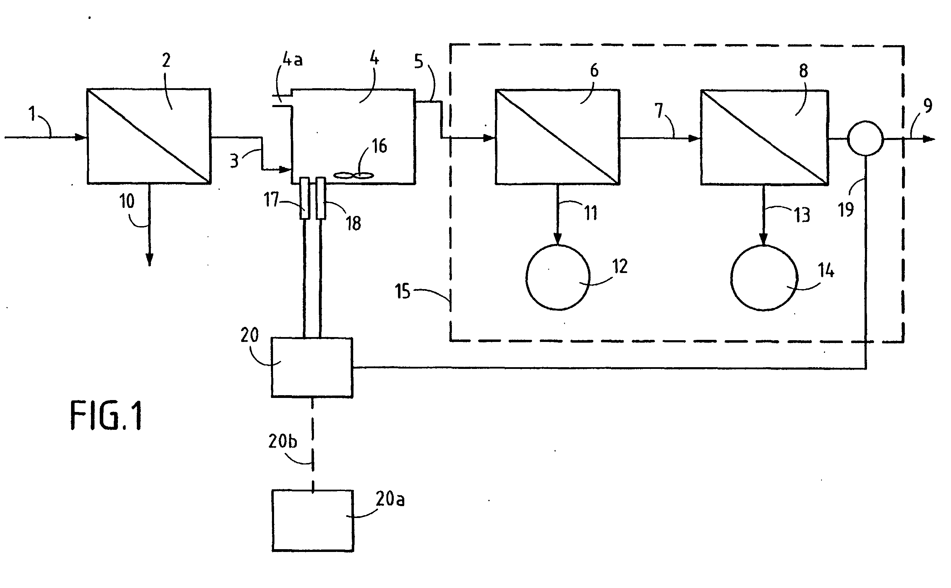

Par référence à la figure 1, les eaux résiduaires à traiter sont délivrées par une canalisation 1 à un filtre 2, par exemple un filtre muni d'une fine grille ayant pour objet de séparer des particules de taille supérieure ou égale à 0,5 millimètre, qui sont évacuées par une sortie 10 ; les eaux grossièrement filtrées sont transportées par une canalisation 3 jusqu'à un fermenteur 4 constitué d'une ou plusieurs cuves disposées en série ou en parallèle, par exemple équipées d'un agitateur 16 favorisant l'homogénéisation du liquide en cours de traitement dans la cuve, et d'un orifice 4a permettant l'introduction de levures ou bactéries dans le fermenteur 4 ; les eaux résiduaires fermentées issues du fermenteur 4 sont délivrées par une canalisation 5 à un premier séparateur 6 à membrane qui sépare les eaux résiduaires désalcoolisées s'échappant par une canalisation 7, d'une fraction alcoolisée sortant par une canalisation 11 et délivrée à un premier organe 12 de stockage de cette fraction alcoolisée ; les eaux désalcoolisées sont délivrées par une canalisation 7 au deuxième séparateur 8 à membrane où s'effectue la séparation de l'eau purifiée évacuée dans une canalisation 9 de rejet, d'un concentrat transporté par une canalisation 13 jusqu'à un réservoir 14 de stockage de celui-ci.

Une unité électronique de contrôle 20 est raccordée à un capteur 17 de température et un capteur 18 de pH dont est muni le fermenteur 4, ainsi qu'à un capteur 19 de mesure de la qualité de l'eau traitée s'écoulant dans la canalisation 9 de rejet, afin de contrôler la qualité de l'eau traitée et d'agir en conséquence sur les différents organes de régulation du procédé de séparation, notamment les organes de régulation de niveau et/ou de débit des différents fluides.

Un calculateur ou automate 20a connecté à l'automate 20 par une ligne téléphonique 20b permet une surveillance à distance du fonctionnement de l'unité de traitement, et permet le contrôle, le suivi et le paramétrage des conditions d'exploitation, leur enregistrement continu ou séquentiel, et leur optimisation.

L'automate 20 assure un suivi en continu des paramètres de fonctionnement de l'installation, (notamment les niveaux de liquides dans les cuves, la résistivité et le pH des eaux épurées), ce qui permet de réguler le fonctionnement de l'unité de traitement, et de l'ajuster à des conditions prédéterminées de rejet des effluents (en terme de débit notamment).

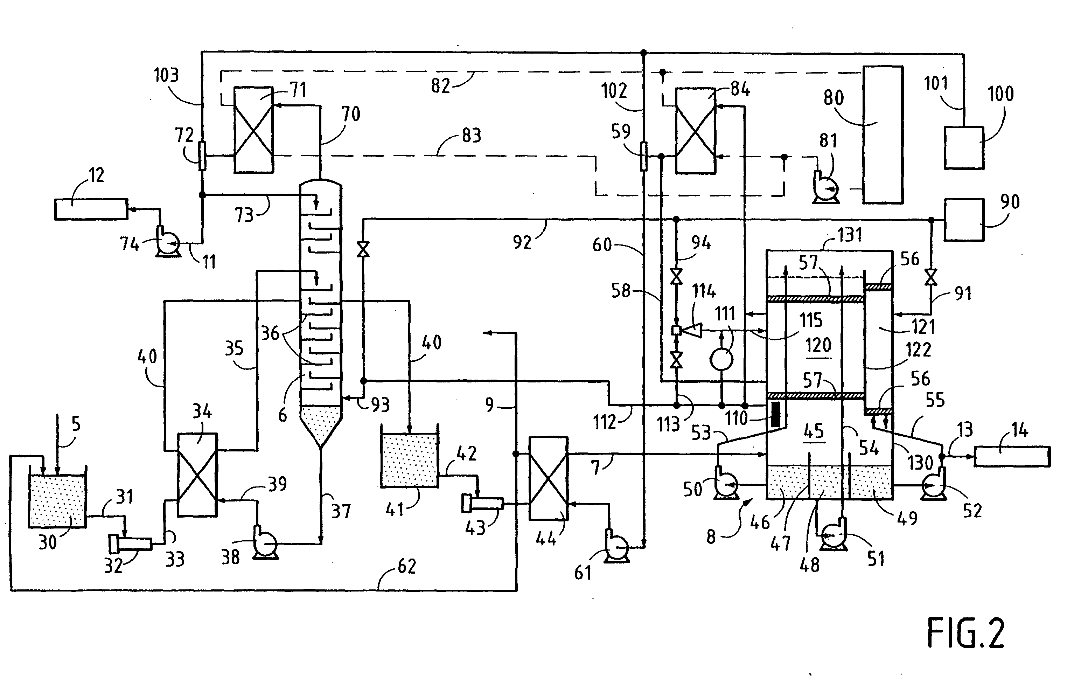

Par référence à la figure 2, l'eau résiduaire fermentée délivrée par la canalisation 5 est introduite dans une cuve tampon 30, d'où elle ressort par une canalisation 31 jusqu'à une pompe 32 qui la délivre par une canalisation 33 à un échangeur 34 permettant un préchauffage des eaux résiduaires à traiter, par échange de chaleur avec le fluide circulant dans l'échangeur 34 et délivré par la canalisation 39.

L'eau résiduaire à traiter sortant de l'échangeur 34 par la canalisation 35 est introduite en partie médiane d'une colonne 6 de distillation équipée de plateaux 36, et s'écoule gravitairement et à contre-courant d'un flux de vapeur résultant de l'introduction de vapeur en partie basse de la colonne 6 par la canalisation 93 ; la fraction liquide (vinasse) recueillie en partie basse de la colonne 6 s'échappe par une canalisation 37 jusqu'à une pompe 38 qui la refoule par la canalisation 39 jusqu'au dit échangeur 34, où elle se refroidit et dont elle ressort par une canalisation 40 de transport jusqu'à une deuxième cuve tampon 41.

L'effluent fermenté issu de l'appareil de fermentation et éventuellement corrigé au niveau du pH, est préréchauffé puis introduit dans la colonne de distillation.

L'entraînement dans la colonne de l'éthanol par la vapeur permet d'obtenir la première fraction (flegme).

Les buées et/ou la vapeur d'eau délivrées par la conduite 93 s'enrichissent en éthanol et sont condensées dans l'échangeur 71 en tête de colonne. Les condensats ainsi produits, dont la charge en éthanol varie de 10 % à 95 % (volume / volume), de préférence de 20 à 40 %, sont extraits en partie haute de la colonne.

L'autre partie est réinjectée en haut de la colonne par un conduit 73 pour constituer un reflux servant à équilibrer ou régler le taux d'alcool. L'éthanol extrait (par 74) est refroidi et stocké en l'état dans une cuve.

L'effluent épuisé en alcool, qui est collecté en pied de colonne, est ainsi transféré dans l'unité d'évapo-concentration. L'effluent rentre en ébullition par passages successifs dans chacun des étages du faisceau tubulaire, et subit progressivement une concentration qui sera finalisée dans l'échangeur à circulation forcée.

Les eaux résiduaires désalcoolisées sont à cet effet transférées par l'intermédiaire de canalisations 42, d'une pompe 43, d'un échangeur 44 et d'une canalisation 7, jusqu'au deuxième séparateur 8 concentrateur qui comporte à l'intérieur de parois 130, 131 formant un réservoir, une partie inférieure 45 formant séparateur, munie de cloisons 47 s'étendant jusqu'au fond de la structure et délimitant trois compartiments 46, 48 et 49 ; dans ces compartiments est recueillie la phase liquide issue de la canalisation 7 ainsi que du ruissellement de la solution à l'intérieur de tubes verticaux de deux échangeurs 120, 121 respectivement, munis de plaques tubulaires horizontales 57, 56 ; comme illustré sur cette figure, une pompe 50 (respectivement 51) sert à aspirer le liquide contenu dans le compartiment 46 (respectivement 48) pour le refouler via une canalisation 53 (respectivement 54) jusqu'au-dessus de la plaque tubulaire supérieure 57 où le liquide est distribué dans les différents tubes de l'échangeur 120 ; dans la calandre des échangeurs tubulaires 120, 121 circule de la vapeur d'eau délivrée par une canalisation 91 et provoquant une évaporation du liquide qui s'écoule gravitairement dans les tubes de l'échangeur 120 et retombe dans les compartiments 46 et 48 formant un séparateur.

La vapeur présente dans la partie supérieure du compartiment 45 du séparateur 8 est aspirée dans une canalisation 112, via un séparateur 110 destiné à éviter l'entraînement dans la canalisation 112 de particules liquides ou solides ; la canalisation 112 est raccordée à une soufflante 111 permettant d'assurer la compression de la vapeur aspirée dans la chambre 45 et sa délivrance par une canalisation 115 dans la calandre de l'échangeur 120 pour participer à l'évaporation de la partie du liquide s'écoulant dans les tubes de cet évaporateur.

Le séparateur 8 comporte un corps d'évapo-concentration en acier inox, également calorifugé, monocorps autoporté, de type échangeur tubulaire, fonctionnant en flot tombant et circulation forcée, avec son séparateur intégré.

L'échangeur tubulaire 120 est du type multiétagé avec un cloisonnement sur la partie séparateur, pour faciliter les étapes successives de concentration ; un étage complémentaire 121 fonctionnant en circulation forcée assure la concentration finale de l'effluent par détente dans le séparateur.

En parallèle avec la machine 111 de compression de vapeur d'eaux résiduaires peut être monté un éjecteur 114 alimenté en vapeur d'eau délivrée (par l'intermédiaire d'une canalisation 94) par une source séparée 90 de vapeur d'eau pour provoquer l'aspiration des vapeurs issues de la chambre 45, par l'intermédiaire de canalisations 112 et 113 et leur compression dans l'éjecteur 114 à venturi (ou thermo-compresseur) ; ceci permet d'assurer une compression d'appoint à la machine 111 et également d'assurer une compression d'une partie des vapeurs d'eaux résiduaires en cas de défaillance de cette soufflante 111 de compression.

Le dispositif 111, 114 de compression des buées d'effluent formées par l'évapo-condenseur assure l'augmentation du niveau énergétique des buées d'évaporation, avant leur réinjection dans la calandre d'évaporateur et/ou en pied de colonne de distillation.

Une régulation de la pression et/ou de la température et de la vitesse de rotation de la soufflante 111 et des pompes permet l'ajustement continu entre les besoins énergétiques et les valeurs souhaitées de débit de traitement et en % de matières sèches du concentré.

Les vapeurs condensées des eaux résiduaires qui sont extraites en partie basse de la calandre de l'échangeur 120, sont transférées par une canalisation 58, un séparateur dégazeur 59, une canalisation 60 et une pompe 61, jusqu'à un échangeur de chaleur 44 à la sortie duquel l'eau purifiée peut être rejetée par une canalisation 9 dans le milieu naturel ; une canalisation 62 raccordée à la canalisation 9 permet le cas échéant de réinjecter l'eau issue de ce traitement dans la cuve tampon 30 recevant les eaux à traiter, notamment dans les phases de démarrage ou d'arrêt de l'installation ou dans le cas où la DCO de l'eau obtenue ne répond pas aux critères souhaités.

Comme illustré en partie gauche de la figure 2, l'alcool présent dans les eaux résiduaires délivrées par la canalisation 35 dans la colonne de distillation 6, qui est entraîné par le flux vertical ascendant de vapeur délivrée par la canalisation 93, s'échappe en partie supérieure de la colonne 6 par une canalisation 70 transférant ces vapeurs alcoolisées à un échangeur refroidisseur 71 permettant la condensation de la fraction alcoolique soutirée de la colonne de distillation qui, après passage dans un séparateur dégazeur 72, peut être délivrée par l'intermédiaire d'une canalisation 11 et d'une pompe 74 à un réservoir 12 de stockage de la fraction alcoolique extraite par ce premier dispositif de séparation.

Un groupe frigorifique 80 permet la production d'eau froide qui circule dans une canalisation aller 83 et retour 82 par action d'une pompe 81, et permet la délivrance aux échangeurs 71 et 84 d'eau froide permettant la condensation des vapeurs circulant dans ces échangeurs.

Un dispositif 100 de mise au vide peut être prévu, qui peut être raccordé par des canalisations 101 à 103 aux séparateurs dégazeurs 72 et 59, notamment pour faire fonctionner l'installation à une pression inférieure à la pression atmosphérique.

Le premier compartiment 46 de l'évapo-condenseur 8 est alimenté en eaux résiduaires par la canalisation 7 et par le ruissellement des tubes de l'échangeur 120 situés au-dessus de ce compartiment ; le deuxième compartiment 48 est alimenté en eaux résiduaires par débordement du compartiment 46 par dessus la cloison 47, et également par le ruissellement provenant des tubes situés en regard de ce compartiment ; par conséquent, les eaux résiduaires présentes dans le compartiment 48 sont plus concentrées en résidus que celles présentes dans le compartiment 46 ; de la même façon, les eaux résiduaires présentes dans le compartiment 49 qui proviennent d'une surverse issue du compartiment 48 d'une part, et de la retombée des eaux résiduaires ayant subi une évaporation supplémentaire par passage dans l'échangeur 121, sont encore plus concentrées en résidus.

Le séparateur 8 comporte en effet une troisième partie d'échangeur 121, dans lequel la solution issue du compartiment 49, et déjà concentrée est introduite sous pression par une pompe 52 pour une évaporation supplémentaire, notamment obtenue par détente à la sortie de cet échangeur ; une partie de la solution concentrée circulant dans la canalisation 55 et délivrée par la pompe 52, est soutirée par une canalisation 13 et délivrée à un réservoir 14 de stockage du concentrat obtenu.

Les buées issues des diverses évaporations sont séparées des solutions en ébullition dans le vase séparateur qui est cloisonné côté liquide et communique côté buées.

La deuxième fraction concentrée est extraite en continu par le conduit 13, refroidie et stockée dans la cuve 14.

Le pourcentage de matière sèche des résidus concentrés pourra varier de 20 à 70 % selon les charges initiales en matière sèche des effluents.

Les buées introduites dans la calandre de l'évaporateur sont condensées par échange thermique avec la solution en ébullition dans chacun des étages de l'échangeur tubulaire.

Les condensats ainsi obtenus, qui représentent la troisième fraction (eau épurée), cèdent leurs calories aux effluents avant traitement et sont extraits pour être soit rejetés, soit recyclés ; c'est la fraction obtenue la plus importante en volume.

La consommation énergétique d'une telle installation peut être de l'ordre de 16 à 20 kilowatts (électrique) au m³/h d'eau traitée et de 70 à 100 kilogrammes de vapeur au m³ d'eau traitée.

### Exemple 1 : traitement d'effluents paravinicoles.

Une série d'essais a été menée sur des eaux résiduaires issues d'une industrie paravinicole, associant les traitements de fermentation des sucres en éthanol et de séparation par distillation et évaporation.

Le procédé a été mis en oeuvre sur un pilote d'une capacité évaporatoire de 150 litres par heure, et disposant d'un chauffage vapeur.

Cet essai a mis en oeuvre 3250 litres d'effluent à 30 grammes par litre de DCO.

Les résultats du traitement peuvent être exprimés en bilan matière de la façon suivante :
- phase concentrée : 75 litres à 321 grammes par kilogramme de matières sèches,
- phase hydro-alcoolique : 115 litres de solution à 337 grammes par litre d'éthanol,
- phase condensat : 3050 litres à 300 milligrammes par litre de DCO.

D'autres essais ont été réalisés suivant le même procédé, dans les mêmes conditions, et les résultats sont les suivants :

| **Volume d'effluent traité** | **3500 litres** | **1100 litres** | **550 litres** |
|---|---|---|---|
| DCO de l'effluent à traiter (g02/l) | 12 | 10 | 55 |
| DCO des buées condensées (eau épurée) (mg02/l) | ₂₀₀ | ₁₃₀ | ₂₄₀ |

La DCO résiduelle dans les condensats n'est pas liée à la DCO de l'effluent traité, mais dépend de la nature de cet effluent.

### Exemple 2 : traitement d'effluents de conserveries de fruits.

Des essais pilote laboratoire ont été réalisés associant fermentation et évapo-concentration à condensation fractionnée, sur des eaux résiduaires de conserveries de fruits présentant les caractéristiques suivantes
- pH : 3.84
- DCO (g02/l) : 97
- Degré Brix : 11.1
- Extrait sec (g/l) : 95.5

Le pilote utilisé consiste en une colonne de fractionnement sous vide d'une capacité utile de 50 litres. L'effluent est introduit dans une cuve à double enveloppe chauffée par micro-ondes.

L'effluent fermenté et fractionné représente 23 litres à 22.3 grammes par litre d'éthanol, et permet de récupérer après évapo-concentration à condensation fractionnée, les trois phases suivantes :
- phase hydro-alcoolique : 1.1 litre à 44.1 % d'éthanol,
- phase concentré : 1.6 litre à 52.4° Brix (réduction volumique : 14.4 fois), riche en acides organiques et glycérol,
- phase condensat : 20.3 litres de condensat ne contenant plus que 6.77 % du Carbone Organique Total (COT) initial de l'effluent.

### Exemple 3 : fermentation alcoolique d'effluents vinicoles et paravinicoles.

Des essais de fermentation sur effluents vinicoles et paravinicoles ont montré que les eaux de lavage de filtres, cuves, canalisations, sont riches en levures fermentaires, et le mélange des eaux de lavage des différentes provenances conduit donc à un ensemencement naturel des effluents.

Lors des essais, l'ensemencement des effluents avec Saccharomyces cerevisiae à une dose de 20 grammes par hectolitre, a permis d'accélérer la phase de latence de la fermentation, phase pendant laquelle la population levurienne se multiplie ; pour un effluent contenant 16 grammes par litre de sucres réducteurs, la fermentation totale des sucres a nécessité 70 heures aux conditions suivantes : pH : 3.5, Température : 25°C.

Des essais ont montré que la fermentation alcoolique n'est pas affectée pour des concentrations en sucres fermentescibles de 100 grammes par litre et 200 grammes par litre ; il a été constaté que, de façon étonnante, le facteur de dilution des composés organiques est suffisant dans les effluents pour que l'éthanol et les molécules aromatiques d'origine végétale pouvant présenter des propriétés fongistatiques, ne soient pas limitants pour la fermentation.

### Exemple 4 : fermentation alcoolique d'effluents de conserveries de fruits.

Des fermentations d'effluents de conserveries de fruits ont été réalisées dans les conditions suivantes :
- pH régulé à 6,
- température ambiante (25°C),
- ensemencement à 20 grammes par hectolitre avec Saccharomyces cervisiae,
- effluent initial à 72 grammes par litre de glucose et fructose.

Après 60 heures de fermentation, il reste moins de 0.1 gramme par litre de sucres, et l'on a produit 3.6 degrés d'alcool (soit un rendement égal à 77.1 % du rendement théorique) ; pour un effluent concentré à 200 grammes par litre de glucose et fructose, le rendement fermentaire n'est pas affecté.

## Revendications

1. Procédé de traitement d'eaux résiduaires sucrées ou alcoolisées, dont la teneur en éthanol est située dans une plage allant de 0,1 à 100 grammes par litre, qui comporte les opérations suivantes :
ii) - on sépare des eaux résiduaires une partie au moins des composés volatils formant un flegme à base d'éthanol et de degré alcoolique variant de 10 à 95 % en volume, par distillation dans une colonne (6)
iii) - on extrait une partie au moins des résidus minéraux et organiques par évaporation des eaux résiduaires dans un évaporateur (8) , afin de maintenir la DCO des eaux traitées à une valeur inférieure ou égale à 0,5 gramme par litre
procédé **caractérisé en ce que** on condense le flegme à base d'éthanol par passage dans un échangeur refroidisseur (71) pour le récupérer en phase liquide, **en ce que** on comprime des vapeurs d'eaux résiduaires résultant de l'évaporation des eaux traitées dans l'évaporateur (8), et **en ce que** dans l'opération iii) on utilise des vapeurs d'eaux résiduaires comprimées pour obtenir l'évaporation des eaux résiduaires, et on provoque une concentration des résidus minéraux et organiques, de sorte qu'ils représentent de 0,5 % à 10 % en volume des eaux résiduaires à traiter, et on obtient, outre les résidus concentrés, une eau traitée qui représente 70 à 98 % du volume de l'eau résiduaire à traiter.

2. Procédé selon la revendication 1, dans lequel les opérations ii) et iii) sont réalisées en continu, et dans lequel la compression des vapeurs d'eaux résiduaires est effectuée mécaniquement.

3. Procédé selon la revendication 2, dans lequel on traite des eaux résiduaires dont la teneur en éthanol est située dans une plage allant de 1 à 50 grammes par litre.

4. Procédé selon l'une quelconque des revendications 1 à 3, dans lequel, dans l'opération iii), on provoque une concentration des résidus minéraux et organiques, de sorte qu'ils représentent de 0,5 % à 10 % en volume des eaux résiduaires à traiter, et dans lequel on obtient, outre les résidus concentrés, d'une part une eau traitée qui représente 70 à 98 % du volume de l'eau résiduaire à traiter, qui est incolore et dont la teneur en éthanol est inférieure ou égale à 0,3 gramme par litre, et dans lequel on obtient d'autre part un flegme dont la teneur en alcool est de l'ordre de 10 à 80 %, de préférence de 20 à 40 % en volume.

5. Procédé selon l'une quelconque des revendications 1 à 4, dans lequel, dans une opération i) préalable à l'opération ii), on transforme une partie au moins des glucides présents dans les eaux résiduaires en composés volatils, par action de micro-organismes et/ou d'enzymes.

6. Procédé selon la revendication 5, dans lequel l'opération i) comporte une opération de fermentation alcoolique des sucres par des levures ou bactéries, en maintenant un pH compris entre 3 et 8 et en maintenant une température des eaux résiduaires comprise entre 10 et 35°C, et dans lequel les opérations i), ii) et iii) sont réalisées sensiblement en continu.

7. Dispositif de traitement d'eaux résiduaires sucrées ou alcoolisées dont la teneur en éthanol est située dans une plage allant de 0,1 à 100 grammes par litre, qui comporte :
- une colonne (6) de distillation qui assure la séparation d'une partie des composés volatils des eaux résiduaires,
- un évaporateur (8) connecté à la colonne de distillation, qui assure l'extraction d'une partie au moins des résidus peu volatils essentiellement organiques présents dans les eaux résiduaires,
ledit dispositif étant **caractérisé en ce que** la partie inférieure de l'évaporateur est munie de cloisons (47) et forme un séparateur concentrateur de résidus, et qu'il comporte en outre un échangeur refroidisseur (71) pour les composés volatils et un moyen de collecte sous forme liquide des composés volatils condensés, ainsi qu'un dispositif (111,114) de compression d'une partie au moins des vapeurs d'eaux résiduaires résultant de l'évaporation des eaux traitées, et une canalisation (115) de délivrance des vapeurs d'eaux résiduaires comprimées à l'évaporateur (8).

8. Dispositif selon la revendication 7, dans lequel l'évaporateur (8) est disposé en aval de la colonne, et qui comporte en outre un fermenteur (4) connecté à la colonne (6) et disposé en amont de celle-ci, lequel fermenteur est muni d'un organe (18) sensible au pH des eaux résiduaires et d'un organe (17) sensible à la température des eaux résiduaires présentes dans le fermenteur, lequel dispositif comporte en outre un moyen de transfert (7, 42, 43) assurant le transfert en continu des eaux résiduaires de ladite colonne (6) audit évaporateur (8).

## Claims

1. Process for treating waste water containing sugar or alcohol whose ethanol content ranges from 0.1 to 100 grams per litre, which comprises the following operations:
ii) separating from the residual waters at least part of the volatile compounds forming an ethanol-based phlegm whose alcohol percentage by volume varies between 10 and 95 %, by distillation on a column (6);
iii) extracting at least part of the mineral and organic residues by evaporation of the residual waters in an evaporator (8), so as to maintain the COD of the treated waters at a value of 0.5 gram per litre or less,
process **characterized in that** the ethanol-based phlegm is condensed by passing it through a cooling exchanger (71) for its recovery in liquid phase, **in that** residual water vapours derived from evaporation of the treated waters in evaporator (8) are compressed, and **in that** during operation iii) compressed residual water vapours are used to obtain evaporation of the residual waters, and the mineral and organic residues are concentrated so that they represent between 0.5 and 10% by volume of the residual waters to be treated, and in addition to the concentrated residues a treated water is obtained which represents 70 to 98 volume % of the residual water to be treated.

2. Process as in claim 1, wherein operations ii) and iii) are conducted continuously, and wherein the compression of the vapours of the residual waters is conducted mechanically.

3. Process as in claim 2, wherein the treated residual waters have an ethanol content of between 1 and 50 grams per litre.

4. Process as in any of claims 1 to 3, wherein during operation iii) concentration of the mineral and organic residues is elicited, so that they represent between 0.5 % and 10 % by volume of the residual waters to be treated, and wherein in addition to the concentrated residues firstly a treated water is obtained representing 70 to 98 volume % of the residual water to be treated, which is colourless and whose ethanol content is 0.3 gram per litre or less, and wherein secondly a phlegm is obtained whose alcohol percentage is in the order of 10 to 80 %, preferably between 20 and 40 % by volume.

5. Process as in any of claims 1 to 4, wherein during operation i) prior to operation ii) at least part of the carbohydrates present in the residual waters are converted into volatile compounds through the action of micro-organisms and/or enzymes.

6. Process as in claim 5, wherein operation i) comprises alcoholic fermentation of the sugars with yeast or bacteria, maintaining a pH of between 3 and 8 and maintaining a residual water temperature of between 10 and 35°C, and wherein operations i), ii) and iii) are conducted substantially continuously.

7. Device for treating residual waters containing sugar or alcohol whose ethanol content lies between 0.1 and 100 grams per litre, which comprises:
- a distillation column (6) ensuring separation of part of the volatile compounds from the residual waters,
- an evaporator (8) connected to the distillation column, ensuring extraction of at least part of the essentially organic, scarcely volatile residues present in the residual waters,
said device being **characterized in that** the lower part of the evaporator is provided with partitions (47) and forms a residue concentrating separator, and **in that** it also comprises a cooling exchanger (71) for the volatile compounds and means for collecting condensed volatile compounds in liquid form, and a device (111,114) for compressing at least part of the residual water vapours resulting from evaporation of the treated waters, and piping (115) to channel compressed residual water vapours to the evaporator (8).

8. Device as in claim 7, wherein the evaporator (8) is arranged downstream from the column, and which also comprises a fermenter (4) connected to column (6) and arranged upstream from the latter, said fermenter is provided with a member (18) sensitive to the pH of the residual waters and a member (17) sensitive to the temperature of the residual waters present in the fermenter, said device also comprising transfer means (7,42,43) to ensure the continuous transfer of the residual waters from said column (6) to said evaporator (8).

## Patentansprüche

1. Verfahren zur Behandlung von Zucker oder Alkohol enthaltenden Abwässern, deren Ethanolgehalt in einem Bereich von 0,1 bis 100 Gramm pro Liter liegt, welches die folgenden Schritte umfasst:
ii) von den Abwässern wird wenigstens ein Teil der flüchtigen Verbindungen, die ein Phlegma auf Ethanolbasis mit einem zwischen 10 und 95 Volumenprozent schwankenden Alkoholgehalt bilden, durch Destillation in einer Kolonne (6) abgeschieden,
iii) wenigstens ein Teil der mineralischen und organischen Rückstände wird durch Verdampfung der Abwässer in einem Verdampfer (8) extrahiert, um den chemischen Sauerstoffbedarf des behandelten Wassers auf einem Wert zu halten, welcher kleiner als oder gleich 0,5 Gramm pro Liter ist,
wobei das Verfahren **dadurch gekennzeichnet ist, dass** das Phlegma auf Ethanolbasis durch Durchlaufen eines Kühlaustauschers (71) kondensiert wird, um es in Flüssigphase zurückzugewinnen, dass Abwasserdämpfe, die aus der Verdampfung des in dem Verdampfer (8) behandelten Wassers hervorgehen, verdichtet werden, und dass im Schritt iii) verdichtete Abwasserdämpfe eingesetzt werden, um die Verdampfung der Abwässer zu erzielen, und eine Konzentration der mineralischen und organischen Rückstände hervorgerufen wird, so dass sie 0,5 bis 10 Volumenprozent der zu behandelnden Abwässer darstellen, und neben den konzentrierten Rückständen ein behandeltes Wasser erhalten wird, dass 70 bis 98 % des Volumens des zu behandelnden Abwassers darstellt.

2. Verfahren nach Anspruch 1, bei dem die Schritte ii) und iii) fortlaufend durchgeführt werden, und bei dem die Verdichtung der Abwasserdämpfe mechanisch durchgeführt wird.

3. Verfahren nach Anspruch 2, bei dem Abwässer behandelt werden, deren Ethanolgehalt in einem Bereich zwischen 1 und 50 Gramm pro Liter liegt.

4. Verfahren nach irgendeinem der Ansprüche 1 bis 3, bei dem in Schritt iii) eine Konzentration der mineralischen und organischen Rückstände hervorgerufen wird, so dass sie 0,5 bis 10 Volumenprozent der zu behandelnden Abwässer darstellen, und bei dem neben den konzentrierten Rückständen einerseits ein behandeltes Wasser erhalten wird, dass 70 bis 98 % des Volumens des zu behandelnden Abwassers darstellt, das farblos ist und dessen Ethanolgehalt kleiner als oder gleich 0,3 Gramm pro Liter ist, und bei dem andrerseits ein Phlegma erhalten wird, dessen Alkoholgehalt in der Größenordnung von 10 bis 80, vorzugsweise von 20 bis 40 Volumenprozent liegt.

5. Verfahren nach irgendeinem der Ansprüche 1 bis 4, bei dem in einem vor Schritt ii) erfolgenden Schritt i) wenigstens ein Teil der in den Abwässern vorliegenden Kohlehydrate durch Mikroorganismen- und/oder Enzymtätigkeit in flüchtige Verbindungen umgewandelt wird.

6. Verfahren nach Anspruch 5, bei dem Schritt i) durch Aufrechterhalten eines pH-Wertes zwischen 3 und 8 und durch Aufrechterhalten einer Temperatur der Abwässer zwischen 10 und 35 °C einen Schritt zur alkoholischen Gärung der Zucker durch Hefen oder Bakterien umfasst, und bei dem die Schritte i), ii) und iii) im Wesentlichen fortlaufend durchgeführt werden.

7. Vorrichtung zur Behandlung von Zucker oder Alkohol enthaltenden Abwässern, deren Ethanolgehalt in einem Bereich von 0,1 bis 100 Gramm pro Liter liegt, die folgendes umfasst:
- eine Destillationskolonne (6), welche die Abscheidung eines Teils der flüchtigen Verbindungen von den Abwässern sicherstellt,
- einen mit der Destillationskolonne verbundenen Verdampfer (8), der das Extrahieren von wenigstens einem Teil der schwerflüchtigen, im Wesentlichen organischen, in den Abwässern vorhandenen Rückstände sicherstellt,
wobei die Vorrichtung **dadurch gekennzeichnet ist, dass** der untere Teil des Verdampfers mit Trennwänden (47) versehen ist und einen Rückstände-Konzentrator-Abscheider bildet, und dass sie außerdem einen Kühlaustauscher (71) für die flüchtigen Verbindungen und ein Mittel zum Sammeln der kondensierten flüchtigen Verbindungen in flüssiger Form aufweist, sowie eine Vorrichtung (111, 114) zum Verdichten von wenigstens einem Teil der aus der Verdampfung des behandelten Wassers hervorgehenden Abwasserdämpfe, und eine Rohrleitung (115), um die verdichteten Abwasserdämpfe an den Verdampfer (8) zu liefern.

8. Vorrichtung nach Anspruch 7, bei welcher der Verdampfer (8) der Kolonne nachgeschaltet ist und die weiterhin einen Fermenter (4) aufweist, der mit der Kolonne (6) verbunden und dieser vorgeschaltet ist, wobei der Fermenter mit einem gegenüber dem pH-Wert der Abwässer empfindlichen Organ (18) sowie mit einem gegenüber der Temperatur der in dem Fermenter vorliegenden Abwässer empfindlichen Organ (17) versehen ist, wobei die Vorrichtung außerdem ein Transportmittel (7, 42, 43) aufweist, das den fortlaufenden Transport der Abwässer von der Kolonne (6) zu dem Verdampfer (8) sicherstellt.
